# EUROPEAN PATENT SPECIFICATION

(11) **EP 2 824 200 B1**
(45) Date of publication and mention of the grant of the patent: **16.05.2018**
(21) Application number: 13758445.4
(22) Date of filing: 04.03.2013
(51) Int. Cl.: C22B 7/00

(54) **PROCESS FOR THE COMPREHENSIVE RECOVERY OF METAL COBALT, RUTHENIUM AND ALUMINUM FROM WASTE CATALYST CO-RU/AL2O3 IN FISCHER-TROPSCH SYNTHESIS**
VERFAHREN ZUR UMFASSENDEN RÜCKGEWINNUNG VON METALLKOBALT, RUTHENIUM UND ALUMINIUM AUS ABFALLKATALYSATOR CO-RU/AL2O3 BEI DER FISCHER-TROPSCH-SYNTHESE
PROCÉDÉ DE RÉCUPÉRATION COMPLÈTE DE COBALT, DE RUTHÉNIUM ET D'ALUMINIUM MÉTALLIQUES À PARTIR D'UN CATALYSEUR USAGÉ DE CO-RU/AL2O3 DANS UNE SYNTHÈSE DE FISCHER-TROPSCH

(30) Priority: 05.03.2012 CN 201210055817
(43) Date of publication of application: 14.01.2015
(73) Proprietor: Sunshine Kaidi New Energy Group Co., Ltd., Wuhan, Hubei 430223 (CN)
(72) Inventor: LIU, Qianqian, Wuhan Hubei 430223 (CN); HAN, Yiming, Wuhan Hubei 430223 (CN); SONG, Dechen, Wuhan Hubei 430223 (CN); XU, Li, Wuhan Hubei 430223 (CN); LAI, Bo, Wuhan Hubei 430223 (CN)
(74) Representative: Zeuner Summerer Stütz
(86) International application number: PCT/CN2013/072119
(87) International publication number: WO 2013/131455

(56) References cited:
- WO-A1-2007/099365
- CN-A- 101 270 420
- CN-A- 101 700 913
- CN-A- 102 796 873
- US-A1- 2004 219 082
- MATJIE R H ET AL: "The selective dissolution of alumina, cobalt and platinum from a calcined spent catalyst using different lixiviants", MINERALS ENGINEERING, PERGAMON PRESS , OXFORD, GB, vol. 18, no. 8, 1 July 2005 (2005-07-01), pages 801-810, XP027815698, ISSN: 0892-6875 [retrieved on 2005-07-01]

## Description

### FIELD OF THE INVENTION

This invention relates to techniques of recovering metals from catalysts and waste catalysts, more particularly, to a method for recovering metal cobalt, ruthenium, and aluminum from waste Co-Ru/Al₂O₃catalysts for Fischer-Tropsch synthesis.

### BACKGROUND OF THE INVENTION

To solve the problems of approaching oil depletion and increased environmental pollution, development of clean, renewable alternative liquid fuels becomes an essential topic. Fischer-Tropsch synthesis converts synthesis gas prepared from gasification of carbon-containing substances such as natural gas, coal, and biomass into liquid fuel (as called synthetic oil) with the aid of Fischer-Tropsch catalysts. This synthetic oil is a clean, renewable fuel that can be converted into widely used gasoline or diesel that meet the Euro 5 standard by consequent treatment such as distillation.

The main metal active components of Fischer-Tropsch catalysts include the metal elements of Group VIII, such as Fe, Co, Ni, and Ru. In particular, the cobalt-based catalyst is a hot topic in research and application of Fischer-Tropsch catalysts due to its outstanding catalytic ability. Though Ru has the highest catalytic activity, its application is limited by its scarcity and high price and is usually used as a promoter to improve the selectivity and activity of a catalyst. There are many patents on Fischer-Tropsch catalysts using cobalt as the main active component and ruthenium as the promoter, e.g., US Pat. No. 4,822,824, CN Pat. No. 1617292A, and CN Pat. No. 101698152A.

Aluminum oxide has a high melting point, excellent thermal stability, and good wear resistance. It is widely used as a carrier for Fischer-Tropsch catalysts. Specially, the weight percentage amount of aluminum oxide in the Fischer-Tropsch catalysts used in slurry bed is more than 50%. However, up to now, there is still no report on recovering aluminum oxide from Fischer-Tropsch catalysts.

The reserves of cobalt and ruthenium in China are scare and mostly rely on expensive imports. This causes increased costs of the catalysts. Though China has a large reserve of bauxite, the increasing consumption of aluminum leads to a deficiency of the aluminum production capacity. Therefore, recovery of cobalt, ruthenium, and aluminum from deactivated Fischer-Tropsch catalysts and recycling them into metal salts or oxides that can be used in preparation of catalysts is a method to reduce environmental pollution as well as production cost of the catalyst.

The prior patents on recovery of cobalt from cobalt-based catalysts carried on aluminum oxide includes CN Pat. No. 101270420 and CN Pat. No. 101700913A.In CN Pat. No. 101270420A, first, CO is introduced into a reactor containing deionized water and waste Fischer-Tropsch catalysts containing cobalt (including waste cobalt-based catalyst containing SiO₂, Al₂O₃, ZrO₂, or TiO₂ as carriers) and heated at a constant temperature. Next, the reactor is cooled down and the CO is released therefrom. After that, the solution containing cobalt is released from the reactor and a lye is added into the solution to precipitate the cobalt as Co(OH)₂. Nitric acid is added into the precipitation to dissolve it. After crystallization by evaporation, Co(NO₃)₂·6H₂O is obtained. The Co(NO₃)₂·6H₂O obtained by this method has a purity lower than 99% and cannot be directly used in preparation of cobalt-based catalyst. In CN Pat. No. 101700913A, waste cobalt-based catalyst on aluminum oxide carrier is ground, dissolved in concentrated hydrochloric acid, precipitated by sodium sulfide, precipitated by oxalic acid, calcined, dissolved in nitric acid, and crystallized by evaporation so as to obtain Co(NO₃)₂·6H₂O having a purity higher than 99%. However, because the waste catalysts are not reduced and because the intermediate CoS in the recovery process has very tiny particle sizes, loss of cobalt is likely to happen during filtration, which leads to a low cobalt recovery rate around 92%.

Among the known methods for recovering ruthenium from waste catalysts, the most widely used one is distillation. For example, CN Pat. No. 100387344C recites an alkali fusion-oxidization distillation method for recovery of ruthenium-based catalysts on activated carbon carrier. In this method, the ruthenium-based catalyst is calcined at 600 - 1000°C to remove the activated carbon carrier, and then is mixed with KOH and KNO₃ and heated at 300 - 900°C for 1 - 5 hours to carry out an alkali fusion reaction. After cooling, an alkali fusion product is obtained. The alkali fusion product is dissolved in hot water of 50 - 90°C to obtain a K₂RuO₄ solution. Then, sodium hypochlorite and concentrated sulfuric acid is added into the solution and distilled at 50 - 90°C for 2 - 4 hours to produce RuO₄ gas. The RuO₄ gas is absorbed with a strong acid solution and then distilled under atmospheric pressure or a reduced pressure to obtain a corresponding ruthenium salt. This method has disadvantages summarized as follows: RuO₄ produced in distillation process is a strong oxidizer. Since it explodes when meeting organic molecules of light molecular weight and is highly toxic, the reactions must be performed in a closed fume hood. Furthermore, the procedure of this method is complex and long. In CN Pat. No. 102108444, a method for recovering ruthenium from ruthenium-based catalysts on carriers is recited. In this method, the catalyst is calcined at a high temperature under nitrogen for removal of organic substances and activation of the catalyst. Then the melted black catalyst solid is oxidized into RuO₄ gas at 100 - 300°C and 1 - 3 MPa under O₂/O₃. The RuO₄ gas is introduced into dilute hydrochloric acid and reduced to red-brown RuCl₃ solution. β-RuCl₃·xH₂O is obtained after vacuum distillation of the RuCl₃ solution. This method has a disadvantage of low ruthenium recovery rate.

CN Pat. No. 101331240 recites a method for recovering ruthenium from used catalysts containing ruthenium oxide. This catalyst contains ruthenium existing in an oxide form loaded on a carrier which is difficult to be dissolved in inorganic acids. In this method, first, the catalyst containing ruthenium oxide is treated with hydrogen flow so that the ruthenium oxide on the carrier is reduced to ruthenium metal. Then it is treated with heated hydrochloric acid under a gas containing oxygen to dissolve the ruthenium metal on the carrier in a form of ruthenium(III). Then the obtained ruthenium(III) chloride solution is obtained is recovered for further treatment. This method has a low ruthenium recovery rate and is not suitable for recovery of catalysts containing ruthenium oxide which uses γ-Al₂O₃ as the carrier.

The aforementioned patents are focused on recovery of a single metal. There is no reports on recovery of the three metals Co, Ru, and Al in one method. Due to the different properties the metals, the recovery rate and purity of the metals changes dramatically in accordance with the recovery method. WO 2007/099365 A1 relates to a process for reprocessing Fischer-Tropsch catalysts.

### SUMMARY OF INVENTION

It is an object of the present invention to provide a safe, efficient method for recovering metal cobalt, ruthenium, and aluminum from waste Co-Ru/Al₂O₃ catalysts for Fischer-Tropsch synthesis.

The method for recovering metal cobalt, ruthenium, and aluminum from waste Co-Ru/Al₂O₃ catalysts for Fischer-Tropsch synthesis described in this present invention comprises the following steps:
1) putting loose particles of a waste Co-Ru/Al₂O₃ catalyst into a muffle furnace, then introducing air into the muffle furnace and calcining the loose particles at 350 - 500°C for 3 - 6 hours to remove the heavy hydrocarbons on the surface of the catalyst particles; then cooling the particles down to room temperature;
2) grinding the particles obtained in step 1) into uniform powders and putting them into a fluidized bed reactor; purging the reactor with nitrogen for 0.5 hour and then reducing the particles in a mixed atmosphere containing H₂ and N₂ in a H₂-to-N₂ volume ratio of 1: 1 - 4: 1 at a space velocity of 1000 - 4000 h⁻¹, a pressure of 0.1 - 1 MPa, and a temperature of 350 - 800°C for 8 - 12 hours;
3) putting the reduced waste catalysts obtained in step 2) and alkali fusing agents into a crucible layer by layer, then putting the crucible into a muffle furnace; heating the muffle furnace and keeping it at 200°C for 1 hour, then increasing the temperature of the muffle furnace by 3°C/min to 900 - 1000°C using a temperature program to carry out an alkali fusion reaction for 2 - 4 hours; then cooling the muffle furnace to room temperature to obtain the alkali fusion product;
4) leaching the alkali fusion product obtained in step 3) in deionized water having a temperature of 90 - 100°C in a solid-to-liquid ratio from 1: 2 to 1: 4 for 0.5 - 1 hour to dissolve the water-soluble K₂RuO₄ and KAlO₂ or Na₂RuO₄ and NaAlO₂, then filtering to obtain a residue;
5) washing the residue obtained in step 4) to neutrality, then adding excess dilute nitric acid to dissolve the cobalt metal and cobalt oxide to obtain a cobalt nitrate solution;
6) adjusting the cobalt nitrate solution obtained in step 5) to a Co²⁺ concentration of 20 g/L, a pH of 1.5, and a temperature of 70°C; adding oxalic acid solution or ammonium oxalate solution having a pH of 1.5 and a temperature of 70°C to precipitate cobalt ions as cobalt oxalate, in which the molar amount of the oxalic acid in the oxalic acid solution or ammonium oxalate in the ammonium oxalate solution is 3 - 4 times the molar amount of the cobalt; hot-filtering and washing the residue with deionized water having a temperature of 65 - 80°C; dehydrating the residue with absolute ethanol to obtain a pink cobalt oxalate precipitate; the reaction occurring in this step is:

   Co(NO₃)₂ + H₂C₂O₄ + 2H₂O = CoC₂O₄·2H₂O ↓ + 2HNO₃;

   or

   Co(NO₃)₂+(NH₄)₂C₂O₄ + 2H₂O = CoC₂O₄·2H₂O ↓ +2NH₄NO₃.
7) drying the pink cobalt oxalate obtained in step 6) in a dryer at 80 - 110°C, then putting the cobalt oxalate to a fluidized bed reactor; purging the fluidized bed reactor with nitrogen for 0.5 hour, then reducing the cobalt oxalate in a mixed atmosphere containing H₂ and N₂ in a H₂-to-N₂ volume ratio of 1: 1 - 4: 1 at a temperature of 400 -560°C, a pressure of 0.1 - 1 MPa, a space velocity of 1000 - 4000 h⁻¹ for 2-4 hours to obtain cobalt metal; the reaction occurring in this step is:

   CoC₂O₄·2H₂O = Co + 2CO₂ + 2H₂O.
8) adding dilute nitric acid to the cobalt metal obtained in step 7) until the cobalt metal just completely dissolves, then evaporating to obtain crystallized Co(NO₃)₂·6H₂O.
9) mixing the filtrate of step 4) and the effluent of step 5), and then dropping reducing agent of absolute ethanol to the mixture and stirring to covert pink ruthenium salt to black ruthenium hydroxide precipitate; then filtering the precipitate and washing it with deionized water having a temperature of 65 - 80°C until the effluent becomes neutral or contains no potassium or sodium ions; then washing the precipitate with absolute ethanol for three times; the reactions occurring in this step are: 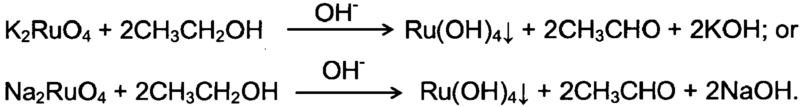
10) putting the black ruthenium hydroxide obtained in step 9) to a three-necked flask having stirring and refluxing devices; adding concentrated hydrochloric acid to the three-necked flask and stirring at 91 - 95°C for 1 - 2 hours; then adding hydroxyl ammonium chloride to completely dissolve the black ruthenium hydroxide, allowing the obtained solution to stand, and then putting the solution to a distilling flask and vacuum-distilling at a vacuum degree of 40 ± 1 KPa until the solution is converted into a paste; then stopping heating to let the liquid evaporate spontaneously to obtain β-RuCl₃·xH₂O crystal; the reactions occurring in this step are:

   Ru(OH)₄ + 4HCl = RuCl₄ + 4H₂O;

   2RuCl₄ + 2NH₂OH·HCl = 2RuCl₃ + N₂ ↑+ 4HCl + 2H₂O.
11) mixing the filtrate obtained in filtration of the ruthenium hydroxide precipitate and the effluent obtained from washing the precipitate in step 9), introducing CO₂ having a purity higher than 99.0% to the mixed liquid and stirring, controlling a reaction temperature at 25 - 95°C to produce white aluminum hydroxide precipitate, wherein the reaction is completed when the pH of the solution reaches 10.0; filtering and then washing the precipitate with deionized water having a temperature of 65 - 80°C until the effluent becomes neutral or contains no potassium or sodium ions; then washing the precipitate with absolute ethanol for three times; the reaction occurring in this step is:

   2KAlO₂ + CO₂ + 3H₂O = K₂CO₃ + 2Al(OH)₃↓;

   or

   2NaAlO₂ + CO₂ + 3 H₂O Na₂CO₃ + 2Al(OH)₃↓.
12) drying the aluminum hydroxide at 80 - 130°C, then calcining at 500 - 750°C to obtain aluminum oxide; the reaction occurring in this step is:

   2Al(OH)₃ = Al₂O₃ + 3H₂O.

In a class of this embodiment, the alkali fusing agents in step 3) are KOH and KNO₃, or NaOH and NaNO₃. The reactions occurring in step 3) are

RuO₂ + 2KOH + KNO₃ = K₂RuO₄ + KNO₂ + H₂O;

Ru + 2KOH + 3KNO₃ = K₂RuO₄ + 3KNO₂ + H₂O;

Al₂O₃ + 2KOH = 2KAlO₂ + H₂O;

or

RuO₂ + 2NaOH + NaNO₃ = Na₂RuO₄ + NaNO₂ + H₂O;

Ru + 2NaOH + 3NaNO₃ = Na₂RuO₄ + 3NaNO₂ + H₂O;

Al₂O₃ + 2NaOH = 2NaAlO₂ + H₂O;

The amount of the alkali fusing agents used is 2.5 times the theoretical amount thereof.

In a class of this embodiment, in step 3), the alkali fusion is layered alkali fusion containing four layers. From the bottom of the crucible upward, 2/3 of the total amount of KOH, waste catalysts, 1/3 of the total amount of KOH, and KNO₃ are disposed layer by layer; or 2/3 of the total amount of NaOH, waste catalysts, 1/3 of the total amount of NaOH, and NaNO₃ are disposed layer by layer. Layered alkali fusion avoids sintering and evaporation of RuO₄ so as to reduce loss of ruthenium.

In a class of this embodiment, in step 3), the temperature of alkali fusion is 950 - 1000°C for achieving complete reaction of ruthenium and aluminum oxide with the alkali fusing agents.

In a class of this embodiment, in step 3), the reaction time of alkali fusion is 3 hours.

In a class of this embodiment, in step 4), the alkali fusion product is leached in deionized water having a temperature of 96- 100°C to ensure the ruthenate and, more importantly, the aluminate to be complete leached;

In a class of this embodiment, in step 4), the solid-to-liquid ratio is 3.

In a class of this embodiment, the concentration of the dilute nitric acid in steps 5) and 8) is 1 - 3 mol/L.

In a class of this embodiment, in step 6), the oxalic acid solution or ammonium oxalate solution is slowly dropped into the cobalt nitrate solution while 5% ammonium water is added to keep the pH of the solution at 1.5 - 1.7 so that the cobalt in the solution is completely precipitated to achieve a high recovery rate thereof.

In a class of this embodiment, the temperature for reducing cobalt oxalate in step 7) is 400 - 480°C.

In a class of this embodiment, in step 9), the reducing agent of ethanol is excess so as to complete convert ruthenate into ruthenium hydroxide precipitate. The molar ratio of the ruthenium in the waste ruthenium-based catalysts to the absolute ethanol is 1: 3 - 1: 5.

In a class of this embodiment, the concentrated hydrochloric acid in step 10) has a mass fraction of 36 - 38%.

In a class of this embodiment, in step 10), the molar ratio of the hydroxyl ammonium chloride to ruthenium element is 1: 1, which helps to achieve β-RuCl₃·xH₂O with a high purity.

In a class of this embodiment, in step 11), in order to produced aluminum hydroxide with a large particle size that can be easily filtered, the reaction temperature is preferable to be 65 - 85°C.

In a class of this embodiment, in step 11), the flow rate of the CO₂ is 500 - 1500 mL/min.

The advantages of the invention is summarized as follows:
1) The method of the invention can effectively separate and recover cobalt, ruthenium, and aluminum from waste Co-Ru/Al₂O₃ catalysts for Fischer-Tropsch synthesis.
2) The waste catalyst is treated by removal of hydrocarbon and reduction. The residue containing cobalt is separated in alkali fusion step, and then is leached in acids. Then via precipitation of cobalt by oxalic acid or ammonium oxalate, reduction of cobalt oxalate, and dissolution of cobalt metal in nitric acid, Co(NO₃)·6H₂O with a purity higher than 99% is obtained. The obtained Co(NO₃)·6H₂O does not contain ions, such as chloride and sulfide ions, which cause catalyst poisoning during Fischer-Tropsch process. Therefore, it can be directly used to prepare Fischer-Tropsch catalysts.
3) The β-RuCl₃·xH₂O obtained via alkali fusion, leaching of ruthenate with deionized water, reduction by ethanol, dissolution by concentrated hydrochloric acid, and vacuum distillation has a high purity. Furthermore, this is a safe process since it does not produce toxic, explosive RuO₄ gas.
4) Via CO₂ carbonation which is performed at a controlled temperature and CO₂ flow rate and ends at a controlled pH, aluminum hydroxide is prepared from aluminate solution. Aluminum oxide obtained by calcining the aluminum hydroxide meets the national standard of first grade alumina. The preparation process is economic and environmentally friendly.
5)The method of the invention achieves high metal recovery rate. Specifically, the cobalt recovery rate is higher than 97%;the ruthenium recovery rate is higher than 95%; and the aluminum recovery rate is higher than 92%.
6) The method of the invention is safe and simple. The equipment and material used therein is cheap and easy to get, leading to low cost and rendering the method suitable for industrial production.

### BRIEF DESCRIPTION OF THE DRAWINGS

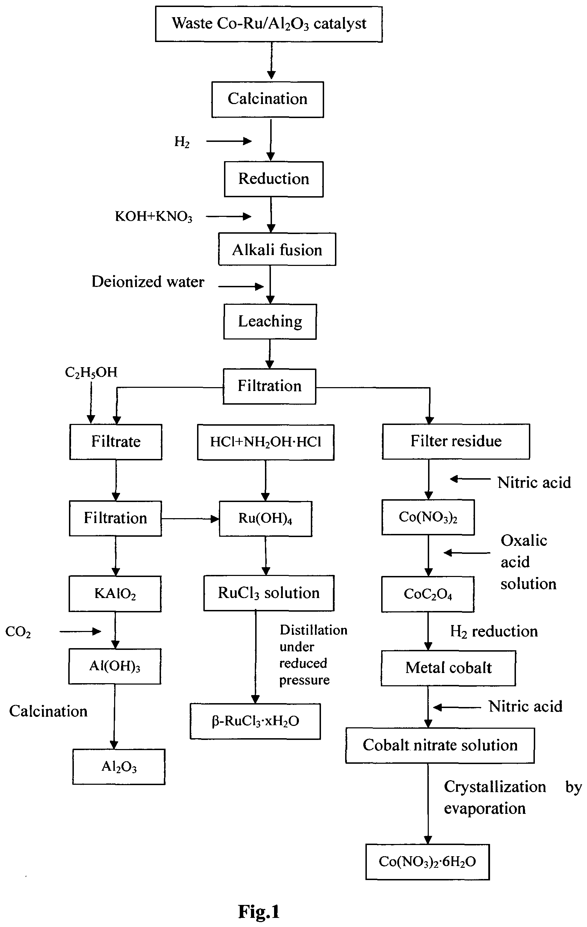

Figure 1 is a flow diagram according to one embodiment of the invention.

### DETAILED DESCRIPTON OF THE INVENTION

The invention is explained in further detail below. It should be noted that the following examples are intended to describe and not to limit the invention.

### Example 1

1) 20.23 g of loose particles of waste Co-Ru/Al₂O₃ catalyst is provided. Elemental analysis determines that the catalyst contains Co 30.05%, Ru 4.83%, and Al 27.90%. The loose particles of waste Co-Ru/Al₂O₃ catalyst is put into a muffle furnace and air is introduced into the muffle furnace. The catalyst particles are calcined at 500°C for 3 hours to remove the heavy hydrocarbons on the surface thereof and then cooled down to room temperature.
2) The waste catalyst obtained in step 1) is ground into uniform powders and then put into a fluidized bed reactor. The powders are reduced in a mixed atmosphere containing H₂ and N₂ in a H₂-to-N₂ volume ratio of 4: 1 at a space velocity of 1000 h⁻¹, a pressure of 1 MPa, and a temperature of 800°C for 10 hours.
3) The reduced waste catalyst obtained in step 2) and alkali fusing agents are put into a crucible layer by layer. The layers disposed from the bottom of the crucible upward contain 21.31 g of KOH, the waste catalyst, 10.65 g of KOH, and 7.32 g of KNO₃, respectively. The crucible is then put into a muffle furnace. The muffle furnace is then heated and kept at 200°C for 1 hour. After that, the temperature of the muffle furnace is increased by 3°C/min to 950°C using a temperature program to carry out alkali fusion reaction for 3 hours. Next, the muffle furnace is cooled down to room temperature to obtain the alkali fusion prod uct.
4) The alkali fusion product obtained in step 3) is leached in deionized water having a temperature of 90°C (in a solid-to-liquid ratio of 1: 2) for 1 hour to completely dissolve the water-soluble K₂RuO₄ and KAlO₂, and then filtered to obtain a residue.
5) The residue obtained in step 4) is washed to neutrality. Next, 300 mL of 3 mol/L dilute nitric acid is added to completely dissolve the cobalt metal and cobalt oxide in the residue to obtain a cobalt nitrate solution.
6) The cobalt nitrate solution obtained in step 5) is adjusted to a Co²⁺ concentration of 20 g/L. The pH of the solution is adjusted to 1.5 by using ammonium water with a mass fraction of 10%, and the temperature of the solution is adjusted to 70°C. Then, the cobalt nitrate solution is slowly mixed with an oxalic acid solution having a pH of 1.5 and a temperature of 70°C to precipitate cobalt ions as cobalt oxalate while ammonium water with a mass fraction of 5% is added to the solution to maintain the pH thereof at 1.5 - 1.7. After precipitation is completed, the mixture is hot-filtered and the precipitate is washed with deionized water having a temperature of 65 - 80°C to neutrality. The washed precipitate is dehydrated with absolute ethanol to obtain a pink cobalt oxalate precipitate. The oxalic acid solution used is prepared by: adding deionized water until 39.01 g of solid oxalic acid (H₂C₂O₄·2H₂O) just dissolves, and adding 5% ammonium water to adjust the solution's pH to 1.5.
7) The cobalt oxalate obtained in step 6) is dried in a dryer at 80°C, then put into a fluidized bed reactor and reduced in a mixed atmosphere containing H₂ and N₂ in a H₂-to-N₂ volume ratio of 3: 1 at 560°C, 0.5 MPa, and a space velocity of 4000 h⁻¹ for 2 hours to obtain cobalt metal.
8) The cobalt metal obtained in step 7) is dissolved in a sufficient amount of 3 mol/L dilute nitric acid. The obtained mixture is evaporated to obtain crystallized Co(NO₃)₂·6H₂O. The crystallized Co(NO₃)₂·6H₂O is cooled in a dryer and then weighed. The obtained Co(NO₃)₂·6H₂O is 29.52 g, the purity of which measured by GBT 15898-1995 method is 99.41%. The recovery rate of cobalt is 97.75%.
9) The filtrate of step 4) and the effluent of step 5) are mixed, and then 30 mL of absolute ethanol is slowly dropped into the mixture and stirred to covert pink ruthenate to black ruthenium hydroxide precipitate. Then the precipitate is filtered and washed with deionized water having a temperature of 65 - 80°C until the effluent becomes neutral and contains no potassium ions. After that, the precipitate is washed with absolute ethanol for three times.
10) The black ruthenium hydroxide obtained in step 9) is put into a three-necked flask having stirring and refluxing devices. Concentrated hydrochloric acid with a mass fraction of 36 - 38°C is added to the three-necked flask. The mixture is stirred at 91 - 95°C for 2 hours. Then 0.67 g of hydroxyl ammonium chloride is added to completely dissolve the black ruthenium hydroxide. The obtained solution is allowed to stand for a while, and then is put into a distilling flask and vacuum-distilled at a vacuum degree of 40 ± 1 KPa until the solution is converted into a paste. Next, heating is stopped to let the liquid evaporate spontaneously to obtain 2.415 g of β-RuCl₃·xH₂O crystal. ICP-AES method determines that the β-RuCl₃·xH₂O has a ruthenium content of 38.58%. The recovery rate of ruthenium is 95.36%.
11) The filtrate obtained from the filtration of the ruthenium hydroxide precipitate and the effluent obtained from washing the precipitate in step 9) are mixed together. The mixture is heated to 95°C, and CO₂ having a purity higher than 99.0% in introduced into the mixture at a flow rate of 1500 mL/min and stirred to produce white aluminum hydroxide precipitate. The reaction is completed when the pH of the solution reaches 10.0. The precipitate is filtered and then washed with deionized water until the effluent becomes neutral and contains no potassium ions. After that, the precipitate is washed with absolute ethanol for three times.
12) The aluminum hydroxide is dried at 120°C, then calcined at 500°C to obtain 10.04 g of aluminum oxide having a purity of 99.31%. The recovery rate of aluminum is 93.47%.

### Example 2

1) 20.74 g of loose particles of waste Co-Ru/Al₂O₃ catalyst is provided. Elemental analysis determines that the catalyst contains Co 25.33%, Ru 3.07%, and Al 32.53%. The loose particles of waste Co-Ru/Al₂O₃ catalyst is put into a muffle furnace and air is introduced into the muffle furnace. The catalyst particles are calcined at 350°C for 6 hours to remove the heavy hydrocarbons on the surface thereof and then cooled down to room temperature.
2) The waste catalyst obtained in step 1) is ground into uniform powders and then put into a fluidized bed reactor. The powders are reduced in a mixed atmosphere containing H₂ and N₂ in a H₂-to-N₂ volume ratio of 2: 1 at a space velocity of 3000 h⁻¹, a pressure of 0.8 MPa, and a temperature of 700°C for 11 hours.
3) The reduced waste catalyst obtained in step 2) and alkali fusing agents are put into a crucible layer by layer. The layers disposed from the bottom of the crucible upward contain 17.50 g of NaOH, the waste catalyst, 8.75 g of NaOH, and 4.02 g of NaNO₃, respectively. The crucible is then put into a muffle furnace. The muffle furnace is then heated and kept at 200°C for 1 hour. After that, the temperature of the muffle furnace is increased by 3°C/min to 900°C using a temperature program to carry out alkali fusion reaction for 4 hours. Next, the muffle furnace is cooled down to room temperature to obtain the alkali fusion product.
4) The alkali fusion product obtained in step 3) is leached in deionized water having a temperature of 95°C (in a solid-to-liquid ratio of 1: 3) for 0.5 hour to completely dissolve the water-soluble Na₂RuO₄ and NaAlO₂, and then filtered to obtain a residue.
5) The residue obtained in step 4) is washed to neutrality. Next, 360 mL of 2mol/L dilute nitric acid is added to completely dissolve the cobalt metal and cobalt oxide in the residue to obtain a cobalt nitrate solution.
6) The cobalt nitrate solution obtained in step 5) is adjusted to a Co²⁺ concentration of 20 g/L. The pH of the solution is adjusted to 1.5 by using ammonium water with a mass fraction of 10%, and the temperature of the solution is adjusted to 70°C. Then, the cobalt nitrate solution is slowly mixed with an ammonium oxalate solution having a pH of 1.5 and a temperature of 70°C to precipitate cobalt ions as cobalt oxalate while ammonium water with a mass fraction of 5% is added to the solution to maintain the pH thereof at 1.5 -1.7. After precipitation is completed, the mixture is hot-filtered and the precipitate is washed with deionized water having a temperature of 65 - 80°C to neutrality. The washed precipitate is dehydrated with absolute ethanol to obtain a pink cobalt oxalate precipitate. The ammonium oxalate solution used is prepared by: adding deionized water until 44.30 g of solid ammonium oxalate ((NH₄)₂C₂O₄·H₂O) just dissolves, and adding 5% ammonium water to adjust the solution's pH to 1.5.
7) The cobalt oxalate obtained in step 6) is dried in a dryer at 90°C, then put into a fluidized bed reactor and reduced in a mixed atmosphere containing H₂ and N₂ in a H₂-to-N₂ volume ratio of 2: 1 at 500°C, 0.8 MPa, and a space velocity of 3000 h⁻¹ for 3 hours to obtain cobalt metal.
8) The cobalt metal obtained in step 7) is dissolved in a sufficient amount of 2mol/L dilute nitric acid. The obtained mixture is evaporated to obtain crystallized Co(NO₃)₂·6H₂O. The crystallized Co(NO₃)₂·6H₂O is cooled in a dryer and then weighed. The obtained Co(NO₃)₂·6H₂O is 25.59 g, the purity of which measured by GBT 15898-1995 method is 99.26%. The recovery rate of cobalt is 97.90%.
9) The filtrate of step 4) and the effluent of step 5) are mixed, and then 20 mL of absolute ethanol is slowly dropped into the mixture and stirred to covert pink ruthenate to black ruthenium hydroxide precipitate. Then the precipitate is filtered and washed with deionized water having a temperature of 65 - 80°C until the effluent becomes neutral and contains no sodium ions. After that, the precipitate is washed with absolute ethanol for three times.
10) The black ruthenium hydroxide obtained in step 9) is put into a three-necked flask having stirring and refluxing devices. Concentrated hydrochloric acid with a mass fraction of 36 - 38°C is added to the three-necked flask. The mixture is stirred at 91 - 95°C for 1.5 hours. Then 0.44 g of hydroxyl ammonium chloride is added to completely dissolve the black ruthenium hydroxide. The obtained solution is allowed to stand for a while, and then is put into a distilling flask and vacuum-distilled at a vacuum degree of 40 ± 1 KPa until the solution is converted into a paste. Next, heating is stopped to let the liquid evaporate spontaneously to obtain 1.603 g of β-RuCl₃·xH₂O crystal. ICP-AES method determines that the β-RuCl₃·xH₂O has a ruthenium content of 37.96%. The recovery rate of ruthenium is 95.59%.
11) The filtrate obtained from the filtration of the ruthenium hydroxide precipitate and the effluent obtained from washing the precipitate in step 9) are mixed together. The mixture is heated to 65°C, and CO₂ having a purity higher than 99.0% in introduced into the mixture at a flow rate of 1200 mL/min and stirred to produce white aluminum hydroxide precipitate. The reaction is completed when the pH of the solution reaches 10.0. The precipitate is filtered and then washed with deionized water until the effluent becomes neutral and contains no sodium ions. After that, the precipitate is washed with absolute ethanol for three times.
12) The aluminum hydroxide is dried at 80°C, then calcined at 600°C to obtain 11.93 g of aluminum oxide having a purity of 98.95%. The recovery rate of aluminum is 92.64%.

### Example 3

1) 19.96 g of loose particles of waste Co-Ru/Al₂O₃ catalyst is provided. Elemental analysis determines that the catalyst contains Co 18.94%, Ru 2.11%, and Al 37.80%. The loose particles of waste Co-Ru/Al₂O₃ catalyst is put into a muffle furnace and air is introduced into the muffle furnace. The catalyst particles are calcined at 400°C for 5 hours to remove the heavy hydrocarbons on the surface thereof and then cooled down to room temperature.
2) The waste catalyst obtained in step 1) is ground into uniform powders and then put into a fluidized bed reactor. The powders are reduced in a mixed atmosphere containing H₂ and N₂ in a H₂-to-N₂ volume ratio of 3: 1 at a space velocity of 2000 h⁻¹, a pressure of 0.5 MPa, and a temperature of 350°C for 12 hours.
3) The reduced waste catalyst obtained in step 2) and alkali fusing agents are put into a crucible layer by layer. The layers disposed from the bottom of the crucible upward contain 19.19 g of NaOH, the waste catalyst, 9.59 g of NaOH, and 2.66 g of NaNO₃, respectively. The crucible is then put into a muffle furnace. The muffle furnace is then heated and kept at 200°C for 1 hour. After that, the temperature of the muffle furnace is increased by 3°C/min to 1000°C using a temperature program to carry out alkali fusion reaction for 2 hours. Next, the muffle furnace is cooled down to room temperature to obtain the alkali fusion product.
4) The alkali fusion product obtained in step 3) is leached in deionized water having a temperature of 100°C (in a solid-to-liquid ratio of 1: 4) for 0.5 hour to completely dissolve the water-soluble Na₂RuO₄ and NaAlO₂, and then filtered to obtain a residue.
5) The residue obtained in step 4) is washed to neutrality. Next, 390 mL of 1 mol/L dilute nitric acid is added to completely dissolve the cobalt metal and cobalt oxide in the residue to obtain a cobalt nitrate solution.
6) The cobalt nitrate solution obtained in step 5) is adjusted to a Co²⁺ concentration of 20 g/L. The pH of the solution is adjusted to 1.5 by using ammonium water with a mass fraction of 10%, and the temperature of the solution is adjusted to 70°C. Then, the cobalt nitrate solution is slowly mixed with an oxalic acid solution having a pH of 1.5 and a temperature of 70°C to precipitate cobalt ions as cobalt oxalate while ammonium water with a mass fraction of 5% is added to the solution to maintain the pH thereof at 1.5 - 1.7. After precipitation is completed, the mixture is hot-filtered and the precipitate is washed with deionized water having a temperature of 65 - 80°C to neutrality. The washed precipitate is dehydrated with absolute ethanol to obtain a pink cobalt oxalate precipitate. The oxalic acid solution used is prepared by: adding deionized water until 28.29 g of solid oxalic acid (H₂C₂O₄·2H₂O) just dissolves, and adding 5% ammonium water to adjust the solution's pH to 1.5.
7) The cobalt oxalate obtained in step 6) is dried in a dryer at 100°C, then put into a fluidized bed reactor and reduced in a mixed atmosphere containing H₂ and N₂ in a H₂-to-N₂ volume ratio of 1: 1 at 400°C, 1 MPa, and a space velocity of 4000 h⁻¹ for 4 hours to obtain cobalt metal.
8) The cobalt metal obtained in step 7) is dissolved in a sufficient amount of 1mol/L dilute nitric acid. The obtained mixture is evaporated to obtain crystallized Co(NO₃)₂·6H₂O. The crystallized Co(NO₃)₂·6H₂O is cooled in a dryer and then weighed. The obtained Co(NO₃)₂·6H₂O is 18.44 g, the purity of which measured by GBT 15898-1995 method is 99.18%. The recovery rate of cobalt is 97.96%.
9) The filtrate of step 4) and the effluent of step 5) are mixed, and then 11 mL of absolute ethanol is slowly dropped into the mixture and stirred to covert pink ruthenate to black ruthenium hydroxide precipitate. Then the precipitate is filtered and washed with deionized water having a temperature of 65 - 80°C until the effluent becomes neutral and contains no sodium ions. After that, the precipitate is washed with absolute ethanol for three times.
10) The black ruthenium hydroxide obtained in step 9) is put into a three-necked flask having stirring and refluxing devices. Concentrated hydrochloric acid with a mass fraction of 36 - 38°C is added to the three-necked flask. The mixture is stirred at 91 - 95°C for 1.5 hours. Then 0.29 g of hydroxyl ammonium chloride is added to completely dissolve the black ruthenium hydroxide. The obtained solution is allowed to stand for a while, and then is put into a distilling flask and vacuum-distilled at a vacuum degree of 40 ± 1 KPa until the solution is converted into a paste. Next, heating is stopped to let the liquid evaporate spontaneously to obtain 1.097 g of β-RuCl₃·xH₂O crystal. ICP-AES method determines that the β-RuCl₃·xH₂O has a ruthenium content of 37.06%. The recovery rate of ruthenium is 96.52%.
11) The filtrate obtained from the filtration of the ruthenium hydroxide precipitate and the effluent obtained from washing the precipitate in step 9) are mixed together. The mixture is heated to 40°C, and CO₂ having a purity higher than 99.0% in introduced into the mixture at a flow rate of 800 mL/min and stirred to produce white aluminum hydroxide precipitate. The reaction is completed when the pH of the solution reaches 10.0. The precipitate is filtered and then washed with deionized water until the effluent becomes neutral and contains no sodium ions. After that, the precipitate is washed with absolute ethanol for three times.
12) The aluminum hydroxide is dried at 100°C, then calcined at 700°C to obtain 13.56 g of aluminum oxide having a purity of 99.07%. The recovery rate of aluminum is 94.26%.

### Example 4

1) 20.18 g of loose particles of waste Co-Ru/Al₂O₃ catalyst is provided. Elemental analysis determines that the catalyst contains Co 11.66%, Ru 0.96%, and Al 43.85%. The loose particles of waste Co-Ru/Al₂O₃ catalyst is put into a muffle furnace and air is introduced into the muffle furnace. The catalyst particles are calcined at 450°C for 4 hours to remove the heavy hydrocarbons on the surface thereof and then cooled down to room temperature.
2) The waste catalyst obtained in step 1) is ground into uniform powders and then put into a fluidized bed reactor. The powders are reduced in a mixed atmosphere containing H₂ and N₂ in a H₂-to-N₂ volume ratio of 1: 1 at a space velocity of 4000 h⁻¹, a pressure of 0.4 MPa, and a temperature of 500°C for 8 hours.
3) The reduced waste catalyst obtained in step 2) and alkali fusing agents are put into a crucible layer by layer. The layers disposed from the bottom of the crucible upward contain 30.95 g of KOH, the waste catalyst, 15.47 g of KOH, and 1.45 g of KNO₃, respectively. The crucible is then put into a muffle furnace. The muffle furnace is then heated and kept at 200°C for 1 hour. After that, the temperature of the muffle furnace is increased by 3°C/min to 960°C using a temperature program to carry out alkali fusion reaction for 4 hours. Next, the muffle furnace is cooled down to room temperature to obtain the alkali fusion product.
4) The alkali fusion product obtained in step 3) is leached in deionized water having a temperature of 98°C (in a solid-to-liquid ratio of 1: 3) for 1 hour to completely dissolve the water-soluble K₂RuO₄ and KAlO₂, and then filtered to obtain a residue.
5) The residue obtained in step 4) is washed to neutrality. Next, 320 mL of 1 mol/L dilute nitric acid is added to completely dissolve the cobalt metal and cobalt oxide in the residue to obtain a cobalt nitrate solution.
6) The cobalt nitrate solution obtained in step 5) is adjusted to a Co²⁺ concentration of 20 g/L. The pH of the solution is adjusted to 1.5 by using ammonium water with a mass fraction of 10%, and the temperature of the solution is adjusted to 70°C. Then, the cobalt nitrate solution is slowly mixed with an ammonium oxalate solution having a pH of 1.5 and a temperature of 70°C to precipitate cobalt ions as cobalt oxalate while ammonium water with a mass fraction of 5% is added to the solution to maintain the pH thereof at 1.5 -1.7. After precipitation is completed, the mixture is hot-filtered and the precipitate is washed with deionized water having a temperature of 65 - 80°C to neutrality. The washed precipitate is dehydrated with absolute ethanol to obtain a pink cobalt oxalate precipitate. The ammonium oxalate solution used is prepared by: adding deionized water until 22.68 g of solid ammonium oxalate ((NH₄)₂C₂O₄·H₂O) just dissolves, and adding 5% ammonium water to adjust the solution's pH to 1.5.
7) The cobalt oxalate obtained in step 6) is dried in a dryer at 110°C, then put into a fluidized bed reactor and reduced in a mixed atmosphere containing H₂ and N₂ in a H₂-to-N₂ volume ratio of 4: 1 at 480°C, 0.8 MPa, and a space velocity of 1000 h⁻¹ for 3 hours to obtain cobalt metal.
8) The cobalt metal obtained in step 7) is dissolved in a sufficient amount of 1 mol/L dilute nitric acid. The obtained mixture is evaporated to obtain crystallized Co(NO₃)₂·6H₂O. The crystallized Co(NO₃)₂·6H₂O is cooled in a dryer and then weighed. The obtained Co(NO₃)₂·6H₂O is 11.36 g, the purity of which measured by GBT 15898-1995 method is 99.72%. The recovery rate of cobalt is 97.48%.
9) The filtrate of step 4) and the effluent of step 5) are mixed, and then 12 mL of absolute ethanol is slowly dropped into the mixture and stirred to covert pink ruthenate to black ruthenium hydroxide precipitate. Then the precipitate is filtered and washed with deionized water having a temperature of 65 - 80°C until the effluent becomes neutral and contains no potassium ions. After that, the precipitate is washed with absolute ethanol for three times.
10) The black ruthenium hydroxide obtained in step 9) is put into a three-necked flask having stirring and refluxing devices. Concentrated hydrochloric acid with a mass fraction of 36 - 38°C is added to the three-necked flask. The mixture is stirred at 91 - 95°C for 1 hour. Then 0.13 g of hydroxyl ammonium chloride is added to completely dissolve the black ruthenium hydroxide. The obtained solution is allowed to stand for a while, and then is put into a distilling flask and vacuum-distilled at a vacuum degree of 40 ± 1 KPa until the solution is converted into a paste. Next, heating is stopped to let the liquid evaporate spontaneously to obtain 0.497 g of β-RuCl₃·xH₂O crystal. ICP-AES method determines that the β-RuCl₃·xH₂O has a ruthenium content of 37.39%. The recovery rate of ruthenium is 95.87%.
11) The filtrate obtained from the filtration of the ruthenium hydroxide precipitate and the effluent obtained from washing the precipitate in step 9) are mixed together. The mixture is heated to 25°C, and CO₂ having a purity higher than 99.0% in introduced into the mixture at a flow rate of 500 mL/min and stirred to produce white aluminum hydroxide precipitate. The reaction is completed when the pH of the solution reaches 10.0. The precipitate is filtered and then washed with deionized water until the effluent becomes neutral and contains no potassium ions. After that, the precipitate is washed with absolute ethanol for three times.
12) The aluminum hydroxide is dried at 130°C, then calcined at 750°C to obtain 15.76 g of aluminum oxide having a purity of 99.21%. The recovery rate of aluminum is 93.53%.

### Examples 5-8

The recovery processes of Examples 5-8 are identical to that of Example 4, except for that the temperatures of the alkali fusion reactions are 951 °C, 970°C, 980°C, and 990°C, respectively. The recovery results are listed in Table 1.

**Table 1 Co, Ru, and Al recovery at different alkali fusion temperatures**

| Example | | 5 | 6 | 7 | 8 |
|---|---|---|---|---|---|
| Alkali fusion temperature | | 951°C | 970°C | 980°C | 990°C |
| Co(NO₃)₂·6H₂O | Weight | 11.56 g | 11.51 g | 11.33 g | 11.43 g |
| | Purity | 99.02% | 99.38% | 99.65% | 99.23% |
| | Recovery rate | 98.50% | 98.43% | 97.16% | 97.60% |
| β-RuCl₃·xH₂O | Weight | 0.501 g | 0.499 g | 0.490 g | 0.497 g |
| | Ru content | 37.27% | 37.18% | 38.04% | 37.82% |
| | Recovery rate | 96.48% | 95.79% | 96.26% | 97.03% |
| Aluminum oxide | Weight | 15.63 g | 15.78 g | 15.75 g | 16.00 g |
| | Purity | 99.27% | 99.51% | 99.36% | 99.78% |
| | Recovery rate | 92.77% | 93.89% | 93.62% | 94.92% |

The data of Examples 1-8 indicates that when the temperature of the alkali fusion reaction is 900 - 1000°C, the purity of recovered Co(NO₃)₂·6H₂O is higher than 99%, and the recovery rates and purities of β-RuCl₃·xH₂O and aluminum oxide are relatively high. Table 1 indicates that limiting the temperature of the alkali fusion reaction in the range of 900 - 1000°C leads to a complete fusion of the ruthenium, the oxide thereof, and aluminum oxide with the alkali fusing agents. In this way, the complete separation of ruthenium and aluminum from cobalt is fulfilled. This is necessary for achieve ideal recovery results.

### Comparative example 1

To explain the importance of the method for the alkali fusion and the temperature thereof, in this comparative example, the mixing alkali fusion method of the prior art is carried out and the temperature of this method is controlled outside of the temperature range used in this invention.

20.04 g of waste Co-Ru/Al₂O₃ catalyst is provided. Elemental analysis determines that the catalyst contains Co 30.05%, Ru 4.83%, and Al 27.90%.The recovery process is identical to that of Example 1, expect for that step 3) is changed to: The reduced waste catalyst obtained in step 2) and alkali fusing agents (KOH 31.67 g, KNO₃ 7.25 g) are mixed uniformly and put into a crucible. The crucible is then put into a muffle furnace. The muffle furnace is then heated and kept at 200°C for 1 hour to allow the sufficient contact between the reactants. After that, the temperature of the muffle furnace is elevated by 3°C/min to 650°C using a temperature program to carry out alkali fusion reaction for 4 hours. Next, the muffle furnace is cooled down to room temperature to obtain the alkali fusion product. The amount of alkali fusing agents used is 2.5 times the theoretical amount thereof. The other steps are not changed. The obtained Co(NO₃)₂·6H₂O is 31.13 g, the purity of which measured by GBT 15898-1995 method is 94.34%. The recovery rate of cobalt is 98.75%. The obtained β-RuCl₃·xH₂O crystal is 2.248 g. ICP-AES method determines that the β-RuCl₃·xH₂O has a ruthenium content of 37.22%. The recovery rate of ruthenium is 86.43%. The obtained aluminum oxide is 9.45 g and has an Al₂O₃ content of 99.17%. The recovery rate of aluminum is 88.72%.

Comparative example 1 shows that the traditional mixing alkali fusion method and a relatively low temperature of alkali fusion lead to a low purity of Co(NO₃)₂·6H₂O and low recovery rates of ruthenium and aluminum. It indicates that the traditional mixing alkali fusion method and a relatively low temperature of alkali fusion result in incomplete alkali fusion and, therefore, cause a poor recovery efficiency.

### Comparative example 2

To explain the importance of the temperature of the deionized water used for leaching the alkali fusion product, in this comparative example, the alkali fusion product is leached in deionized water having a temperature of 80°C.

20.68 g of waste Co-Ru/Al₂O₃ catalyst is provided. Elemental analysis determines that the catalyst contains Co 25.33%, Ru 3.07%, and Al 32.53%. The recovery process is identical to that of Example 2, expect for that the alkali fusion product obtained in step 3) is leached in deionized water having a temperature of 80°C (in a solid-to-liquid ratio of 1: 2) for 1 hour. The other steps are not changed. The obtained Co(NO₃)₂·6H₂O is 25.31 g, the purity of which measured by GBT 15898-1995 method is 99.14%. The recovery rate of cobalt is 96.99%. The obtained β-RuCl₃·xH₂O crystal is 1.604 g. ICP-AES method determines that the β-RuCl₃·xH₂O has a ruthenium content of 37.63%. The recovery rate of ruthenium is 95.09%. The obtained aluminum oxide is 10.34 g and has an Al₂O₃ content of 99.35%. The recovery rate of aluminum is 80.81%.

Comparative example 1 shows that leaching the alkali fusion product in deionized water having a temperature of 80°C leads to a low recovery rate of aluminum. It indicates that when the temperature of the deionized water used for leaching the alkali fusion product is lower than that in the invention, aluminate in the alkali fusion product cannot be completely leached.

### Comparative example 3

To explain the importance of the parameters in addition of oxalic acid or ammonium oxalate, the temperature for reducing cobalt oxalate, and the parameters for determining the end of the carbonation reaction for separating aluminum hydroxide, in this comparative example, these parameters are controlled at values different from those in the invention.

20.01 g of waste Co-Ru/Al₂O₃ catalyst is provided. Elemental analysis determines that the catalyst contains Co 18.94%, Ru 2.11%, and Al 37.80%.

Steps 1) - 5) are identical to those in Example 3.

In step 6), the cobalt nitrate solution obtained in step 5) is adjusted to a pH of 1.5 by using ammonium water with a mass fraction of 10%, and the temperature of the solution is adjusted to 70°C. Then, an oxalic acid solution having a pH of 1.5 and a temperature of 70°C is added into the cobalt nitrate solution and continuously stirred, and the pH of the mixture is adjusted to 1.5 by using ammonium water with a mass fraction of 5%. Next, the mixture is hot-filtered and the precipitate is washed with deionized water having a temperature of 65 - 80°C to neutrality. The washed precipitate is dehydrated with absolute ethanol to obtain a pink cobalt oxalate precipitate. The oxalic acid solution used is prepared by: adding deionized water until 28.29 g of solid oxalic acid (H₂C₂O₄·2H₂O) just dissolves, and adding 5% ammonium water to adjust the solution's pH to 1.5.

In step 7), the cobalt oxalate obtained in step 6) is dried in a dryer at 100°C, then put into a fluidized bed reactor and reduced in a mixed atmosphere containing H₂ and N₂ in a H₂-to-N₂ volume ratio of 1: 1 at 300°C, 1 MPa, and a space velocity of 4000 h⁻¹ for 4 hours to obtain cobalt metal.

Steps 8) - 10) are identical to those of Example 3.

In step 11), the filtrate obtained from the filtration of the ruthenium hydroxide precipitate and the effluent obtained from washing the precipitate in step 9) are mixed together. The mixture is heated to 40°C, and CO₂ having a purity higher than 99.0% in introduced into the mixture at a flow rate of 800 mL/min and stirred to produce white aluminum hydroxide precipitate. The reaction is completed when the pH of the solution reaches 11.5. The precipitate is filtered and then washed with deionized water until the effluent becomes neutral and contains no sodium ions. After that, the precipitate is washed with absolute ethanol for three times.

Step 12) is identical to that of Example 3.

The obtained Co(NO₃)₂·6H₂O is 17.03 g, the purity of which measured by GBT 15898-1995 method is 99.09%. The recovery rate of cobalt is 90.16%. The obtained β-RuCl₃·xH₂O crystal is 1.085 g. ICP-AES method determines that the β-RuCl₃·xH₂O has a ruthenium content of 37.22%. The recovery rate of ruthenium is 95.61%. The obtained aluminum oxide is 11.47 g and has a purity of 99.04%. The recovery rate of aluminum is 79.47%.

Comparative example 3 shows that traditional method of adding oxalic acid or ammonium oxalate at a relatively low temperature leads to a low recovery rate of cobalt; and that if carbonation for separating aluminum hydroxide is ended unsuitably, an incomplete reaction occurs and the recovery rate of aluminum is dramatically reduced.

## Claims

1. A method for recovering metal cobalt, ruthenium, and aluminum from waste Co-Ru/Al₂O₃ catalysts for Fischer-Tropsch synthesis, the method comprising:
1) putting loose particles of a waste Co-Ru/Al₂O₃ catalyst into a muffle furnace, then introducing air into the muffle furnace and calcining the loose particles at 350 - 500°C for 3 - 6 hours to remove heavy hydrocarbons on the surface of the loose particles, and then cooling the loose particles down to room temperature;
2) grinding the loose particles obtained in step 1) into uniform powders, then putting the ground powders into a fluidized bed reactor, then purging the reactor with nitrogen for 0.5 hour, and then reducing the ground powders in a mixed atmosphere containing H₂ and N₂ in a H₂-to-N₂ volume ratio of 1: 1 - 4: 1 at a space velocity of 1000 - 4000 h⁻¹, a pressure of 0.1 - 1 MPa, and a temperature of 350 - 800°C for 8 - 12 hours;
3) putting the reduced waste catalysts obtained in step 2) and alkali fusing agents into a crucible layer by layer, then putting the crucible into a muffle furnace, then heating the muffle furnace and keeping it at 200°C for 1 hour, then increasing the temperature of the muffle furnace by 3°C/min to 900 - 1000°C using a temperature program to carry out an alkali fusion reaction for 2 - 4 hours; then cooling the muffle furnace to room temperature to obtain an alkali fusion product;
4) leaching the alkali fusion product obtained in step 3) in deionized water having a temperature of 90 - 100°C in a solid-to-liquid ratio from 1: 2 to 1: 4 for 0.5 - 1 hour to dissolve water-soluble K₂RuO₄ and KAlO₂ or Na₂RuO₄ and NaAlO₂, then filtering to obtain a residue;
5) washing the residue obtained in step 4) to neutrality, then adding excess dilute nitric acid to dissolve cobalt metal and cobalt oxide in the residue to obtain a cobalt nitrate solution;
6) adjusting the cobalt nitrate solution obtained in step 5) to a Co²⁺ concentration of 20 g/L, a pH of 1.5, and a temperature of 70°C, then adding oxalic acid solution or ammonium oxalate solution having a pH of 1.5 and a temperature of 70°C to the cobalt nitrate solution to precipitate cobalt ion as cobalt oxalate, wherein the molar amount of the oxalic acid in the oxalic acid solution or ammonium oxalate in the ammonium oxalate solution is 3 - 4 times the molar amount of the cobalt ion; then hot-filtering and washing the residue with deionized water having a temperature of 65 - 80°C; and then dehydrating the residue with absolute ethanol to obtain a pink cobalt oxalate precipitate, wherein the reaction occurring in this step is:
Co(NO₃)₂ + H₂C₂O₄ + 2H₂O = CoC₂O₄·2H₂O ↓ + 2HNO₃;
or
CO(NO₃)₂+(NH₄)₂C₂O₄ + 2H₂O = CoC₂O₄·2H₂O ↓+ 2NH₄NO₃;
7) drying the cobalt oxalate obtained in step 6) in a dryer at 80 - 110°C, then putting the cobalt oxalate to a fluidized bed reactor, then purging the fluidized bed reactor with nitrogen for 0.5 hour, and then reducing the cobalt oxalate in a mixed atmosphere containing H₂ and N₂ in a H₂-to-N₂ volume ratio of 1: 1 - 4: 1 at a temperature of 400 - 560°C, a pressure of 0.1 - 1 MPa, and a space velocity of 1000-4000 h⁻¹ for 2 - 4 hours to obtain cobalt metal, wherein the reaction occurring in this step is:
CoC₂O₄·2H₂O = Co + 2CO₂ + 2H₂O;
8) adding dilute nitric acid to the cobalt metal obtained in step 7) until the cobalt metal just completely dissolves, and then evaporating to obtain crystallized Co(NO₃)₂·6H₂O;
9) mixing a filtrate of step 4) and a effluent of step 5), then dropping reducing agent of absolute ethanol into the mixture and stirring to covert pink ruthenium salt to black ruthenium hydroxide precipitate, then filtering the precipitate and washing the precipitate with deionized water having a temperature of 65 - 80°C until the effluent becomes neutral or contains no potassium or sodium ions, and then washing the precipitate with absolute ethanol for three times, wherein the reaction occurring in this step is: 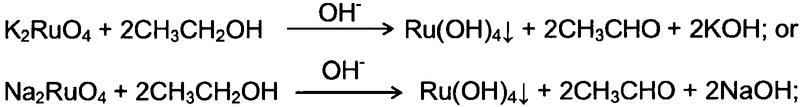
10) putting the black ruthenium hydroxide obtained in step 9) to a three-necked flask having stirring and refluxing devices; then adding concentrated hydrochloric acid to the three-necked flask and stirring at 91 - 95°C for 1 - 2 hours; then adding hydroxyl ammonium chloride to completely dissolve the black ruthenium hydroxide; then allowing the obtained solution to stand; then putting the solution to a distilling flask and vacuum-distilling at a vacuum degree of 40 ± 1 KPa until the solution is converted into a paste; then stopping heating to let the liquid evaporate spontaneously to obtain β-RuCl₃·xH₂O crystal, wherein the reactions occurring in this step are:
Ru(OH)₄ + 4HCl = RuCl₄ + 4H₂O;
2RuCl₄ + 2NH₂OH·HCl = 2RuCl₃ + N₂ ↑+ 4HCl + 2H₂O;
11) mixing the filtrate obtained in filtration of the ruthenium hydroxide precipitate and the effluent obtained from washing the precipitate in step 9), then introducing CO₂ having a purity higher than 99.0% to the mixed liquid and stirring at 25 - 95°C to produce white aluminum hydroxide precipitate, wherein the reaction is completed when the pH of the solution reaches 10.0; then filtering and washing the precipitate with deionized water having a temperature of 65 - 80°C until the effluent becomes neutral or contains no potassium or sodium ions; and then washing the precipitate with absolute ethanol for three times, wherein the reaction occurring in this step is:
2KAlO₂ + CO₂ + 3H₂O = K₂CO₃ + 2Al(OH)₃↓;
or
2NaAlO₂ + CO₂ + 3 H₂O = Na₂CO₃ + 2Al(OH)₃↓;
and
12) drying the aluminum hydroxide at 80 - 130°C, and then calcining at 500 - 750°C to obtain aluminum oxide, wherein the reaction occurring in this step is:
2Al(OH)₃ = Al₂O₃ + 3H₂O.

2. The method for recovering metal cobalt, ruthenium, and aluminum from waste Co-Ru/Al₂O₃ catalysts for Fischer-Tropsch synthesis of claim 1, wherein:
the alkali fusing agents in step 3) are KOH and KNO₃, or NaOH and NaNO₃;
the reactions occurring in step 3) are
RuO₂ + 2KOH + KNO₃ = K₂RuO₄ + KNO₂ + H₂O;
Ru + 2KOH + 3KNO₃ = K₂RuO₄ + 3KNO₂ + H₂O;
Al₂O₃ + 2KOH = 2KAlO₂ + H₂O;
or
RuO₂ + 2NaOH + NaNO₃ = Na₂RuO₄ + NaNO₂ + H₂O;
Ru + 2NaOH + 3NaNO₃ = Na₂RuO₄ + 3NaNO₂ + H₂O;
Al₂O₃ + 2NaOH = 2NaAlO₂ + H₂O; and
the amount of the alkali fusing agents used is 2.5 times a theoretical amount thereof.

3. The method for recovering metal cobalt, ruthenium, and aluminum from waste Co-Ru/Al₂O₃ catalysts for Fischer-Tropsch synthesis of claim 1 or 2, wherein:
the alkali fusion in step 3) is layered alkali fusion containing four layers;
from the bottom of the crucible upward, 2/3 of the total amount of KOH, waste catalysts, 1/3 of the total amount of KOH, and KNO₃ are disposed layer by layer; or 2/3 of the total amount of NaOH, waste catalysts, 1/3 of the total amount of NaOH, and NaNO₃ are disposed layer by layer; and
layered alkali fusion avoids sintering and evaporation of RuO₄ for reducing loss of ruthenium.

4. The method for recovering metal cobalt, ruthenium, and aluminum from waste Co-Ru/Al₂O₃ catalysts for Fischer-Tropsch synthesis of claim 1 or 2, wherein a temperature of alkali fusion in step 3) is 950 - 1000°C for achieving complete reaction of ruthenium and aluminum oxide with the alkali fusing agents.

5. The method for recovering metal cobalt, ruthenium, and aluminum from waste Co-Ru/Al₂O₃ catalysts for Fischer-Tropsch synthesis of claim 1 or 2, wherein a reaction time of alkali fusion in step 3) is 3 hours.

6. The method for recovering metal cobalt, ruthenium, and aluminum from waste Co-Ru/Al₂O₃ catalysts for Fischer-Tropsch synthesis of claim 1 or 2, wherein in step 4), the alkali fusion product is leached in deionized water having a temperature of 96 - 100°C to ensure the ruthenate and, more importantly, the aluminate to be complete leached.

7. The method for recovering metal cobalt, ruthenium, and aluminum from waste Co-Ru/Al₂O₃ catalysts for Fischer-Tropsch synthesis of claim 1 or 2, wherein in step 4), the solid-to-liquid ratio is 3.

8. The method for recovering metal cobalt, ruthenium, and aluminum from waste Co-Ru/Al₂O₃ catalysts for Fischer-Tropsch synthesis of claim 1 or 2, wherein a concentration of the dilute nitric acid in steps 5) and 8) is 1 - 3 mol/L.

9. The method for recovering metal cobalt, ruthenium, and aluminum from waste Co-Ru/Al₂O₃ catalysts for Fischer-Tropsch synthesis of claim 1 or 2, wherein in step 6), the oxalic acid solution or ammonium oxalate solution is slowly dropped into the cobalt nitrate solution while 5% ammonium water is added to keep the pH of the solution at 1.5 - 1.7 to completely precipitate cobalt in the solution to achieve a high recovery rate of cobalt.

10. The method for recovering metal cobalt, ruthenium, and aluminum from waste Co-Ru/Al₂O₃ catalysts for Fischer-Tropsch synthesis of claim 1 or 2, wherein a temperature for reducing cobalt oxalate in step 7) is 400 - 480°C.

11. The method for recovering metal cobalt, ruthenium, and aluminum from waste Co-Ru/Al₂O₃ catalysts for Fischer-Tropsch synthesis of claim 1 or 2, wherein in step 9):
the reducing agent of ethanol is excess to complete convert ruthenate into ruthenium hydroxide precipitate; and
a molar ratio of the ruthenium in the waste ruthenium-based catalysts to the absolute ethanol is 1: 3 - 1: 5.

12. The method for recovering metal cobalt, ruthenium, and aluminum from waste Co-Ru/Al₂O₃ catalysts for Fischer-Tropsch synthesis of claim 1 or 2, wherein a concentrated hydrochloric acid in step 10) has a mass fraction of 36 - 38%.

13. The method for recovering metal cobalt, ruthenium, and aluminum from waste Co-Ru/Al₂O₃ catalysts for Fischer-Tropsch synthesis of claim 1 or 2, wherein in step 10), a molar ratio of the hydroxyl ammonium chloride to ruthenium element is 1: 1 for obtaining β-RuCl₃·xH₂O having a high purity.

14. The method for recovering metal cobalt, ruthenium, and aluminum from waste Co-Ru/Al₂O₃ catalysts for Fischer-Tropsch synthesis of claim 1 or 2, wherein in step 11), a reaction temperature is preferable to be 65 - 85°C to produced aluminum hydroxide having a large particle size that is able to be easily filtered.

15. The method for recovering metal cobalt, ruthenium, and aluminum from waste Co-Ru/Al₂O₃ catalysts for Fischer-Tropsch synthesis of claim 1 or 2, wherein in step 11), a flow rate of the CO₂ is 500 - 1500 mL/min.

## Patentansprüche

1. Verfahren zur Rückgewinnung von Metallkobalt, Ruthenium und Aluminium aus Co-Ru/Al₂O₃-Abfallkatalysatoren für die Fischer-Tropsch-Synthese, wobei das Verfahren umfasst:
1) Einbringen loser Teilchen eines Co-Ru/Al₂O₃-Abfallkatalysators in einen Muffelofen, dann Einführen von Luft in den Muffelofen und Kalzinieren der losen Teilchen bei 350 bis 500 °C für 3 bis 6 Stunden, um schwere Kohlenwasserstoffe auf der Oberfläche der losen Teilchen zu entfernen, und dann Abkühlen der losen Teilchen auf Zimmertemperatur;
2) Mahlen der in Schritt 1) erhaltenen losen Teilchen zu gleichförmigen Pulvern, anschließende Zugabe der gemahlenen Pulver in einen Wirbelschichtreaktor, dann 0,5-stündiges Spülen des Reaktors mit Stickstoff und anschließendes Reduzieren der gemahlenen Pulver in einer H₂ und N₂ enthaltenden gemischten Atmosphäre in einem H₂-zu-N₂-Volumenverhältnis von 1:1 bis 4:1 bei einer Raumgeschwindigkeit von 1000 bis 4000 h⁻¹, einem Druck von 0,1 bis 1 MPa und einer Temperatur von 350 bis 800 °C für 8 bis 12 Stunden;
3) Einbringung der in Schritt 2) erhaltenen reduzierten Abfallkatalysatoren und Alkalifusionierungsmittel Schicht für Schicht in einen Tiegel, dann Platzieren des Tiegels in einen Muffelofen, Aufheizen des Muffelofens und dessen Halten für 1 Stunde bei 200 °C, dann Erhöhung der Temperatur des Muffelofens um 3 °C/min auf 900 bis 1000 °C unter Verwendung eines Temperaturprogramms, um eine Alkalifusionsreaktion für 2 bis 4 Stunden durchzuführen; dann Abkühlen des Muffelofens auf Raumtemperatur, um ein Alkalifusionierungsprodukt zu erhalten;
4) Auslaugen des in Schritt 3 erhaltenen Alkalifusionierungsprodukts in entionisiertem Wasser mit einer Temperatur von 90 bis 100 °C in einem Feststoff-zu-Flüssigkeits-Verhältnis von 1:2 bis 1:4 für 0,5 bis 1 Stunde, um wasserlösliches K₂RuO₄ und KAlO₂ oder Na₂RuO₄ und NaAlO₂ zu lösen, dann Filtrieren, um einen Rückstand zu erhalten;
5) Waschen des in Schritt 4) erhaltenen Rückstands bis zur Neutralität, dann Zugabe von verdünnter Salpetersäure im Überschuss, um Kobaltmetall und Kobaltoxid im Rückstand zu lösen, um eine Kobaltnitratlösung zu erhalten;
6) Einstellen der in Schritt 5) erhaltenen Kobaltnitratlösung auf eine Co²⁺-Konzentration von 20 g/l, einen pH-Wert von 1,5 und eine Temperatur von 70 °C, dann Zugabe von Oxalsäurelösung oder Ammoniumoxalatlösung mit einem pH-Wert von 1,5 und einer Temperatur von 70 °C zu der Kobaltnitratlösung, um Kobaltionen als Kobaltoxalat auszufällen, wobei die molare Menge der Oxalsäure in der Oxalsäurelösung oder des Ammoniumoxalats in der Ammoniumoxalatlösung das 3-bis 4-fache der molaren Menge des Kobaltions beträgt; dann Heißfiltrieren und Waschen des Rückstands mit entionisiertem Wasser mit einer Temperatur von 65 bis 80 °C; und dann Dehydratisieren des Rückstands mit absolutem Ethanol, um einen pinkfarbenen Kobaltoxalat-Niederschlag zu erhalten, wobei in diesem Schritt die folgende Reaktion abläuft:
Co(NO₃)₂ + H₂C₂O₄ + 2H₂O = CoC₂O₄·2H₂O ↓ + 2HNO₃;
oder
Co(NO₃)₂+(NH₄)₂C₂O₄ + 2H₂O = CoC₂O₄·2H₂O ↓ +2NH₄NO₃;
7) Trocknen des in Schritt 6) erhaltenen Kobaltoxalats in einem Trockner bei 80 bis 110 °C, dann Überführen des Kobaltoxalats in einen Wirbelschichtreaktor, dann 0,5-stündiges Spülen des Wirbelschichtreaktors mit Stickstoff und anschließendes Reduzieren des Kobaltoxalats in einer gemischten Atmosphäre, die H₂ und N₂ in einem H₂/N₂-Volumenverhältnis von 1:1 bis 4:1 bei einer Temperatur von 400 bis 560 °C, einem Druck von 0,1 bis 1 MPa und einer Raumgeschwindigkeit von 1000 bis 4000 h⁻¹ für 2 bis 4 Stunden, um ein Kobaltmetall zu erhalten, wobei in diesem Schritt die folgende Reaktion abläuft:
CoC₂O₄·2H₂O = Co + 2CO₂ + 2H₂O;
8) Zugabe von verdünnter Salpetersäure zu dem in Schritt 7) erhaltenen Kobaltmetall, bis sich das Kobaltmetall gerade vollständig auflöst, und anschließendes Verdampfen, um kristallisiertes Co(NO₃)₂·6H₂O zu erhalten;
9) Mischen eines Filtrats von Schritt 4) und eines Abstroms von Schritt 5), dann Eintropfen von absolutem Ethanol als Reduktionsmittel in das Gemisch und Rühren, um das rosa Rutheniumsalz in einen schwarzen Rutheniumhydroxid-Niederschlag zu verwandeln, dann Filtrieren des Niederschlags und Waschen des Niederschlags mit entionisiertem Wasser mit einer Temperatur von 65 bis 80 °C, bis der Abstrom neutral wird oder keine Kalium- oder Natriumionen enthält, und dann dreimaliges Waschen des Niederschlags mit absolutem Ethanol, wobei in diesem Schritt die folgende Reaktion abläuft: 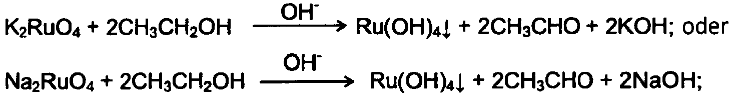
10) Einbringen des in Schritt 9) erhaltenen schwarzen Rutheniumhydroxids in einen Dreihalskolben mit Rühr- und Rückflussvorrichtungen; dann Zugabe von konzentrierter Salzsäure zu dem Dreihalskolben und Rühren bei 91 bis 95 °C für 1 bis 2 Stunden; dann Zugabe von Hydroxylammoniumchlorid, um das schwarze Rutheniumhydroxid vollständig zu lösen; dann Stehenlassen der erhaltenen Lösung; dann Einbringen der Lösung in einen Destillierkolben und Vakuumdestillieren bei einem Vakuumgrad von 40 ± 1 KPa, bis die Lösung in eine Paste umgewandelt ist; dann Stoppen des Erhitzens, um die Flüssigkeit spontan verdampfen zu lassen, um β-RuCl₃ · xH₂O-Kristall zu erhalten, wobei in diesem Schritt die folgenden Reaktionen ablaufen:
Ru(OH)₄ + 4HCl = RuCl₄ + 4H₂O;
2RuCl₄ + 2NH₂OH·HCl = 2RuCl₃ + N₂ ↑+ 4HCl + 2H₂O;
11) Mischen des bei der Filtration des Rutheniumhydroxid-Niederschlags erhaltenen Filtrats und des aus dem Waschen des Niederschlags in Schritt 9) erhaltenen Abstroms, dann Einleiten von CO₂ mit einer Reinheit von mehr als 99,0 % in die gemischte Flüssigkeit und Rühren bei 25 bis 95 °C zur Herstellung von weißem Aluminiumhydroxid-Niederschlag, wobei die Reaktion beendet ist, wenn der pH-Wert der Lösung 10,0 erreicht; dann Filtrieren und Waschen des Niederschlags mit entionisiertem Wasser mit einer Temperatur von 65 bis 80 °C, bis der Abstrom neutral wird oder keine Kalium- oder Natriumionen enthält; und dann dreimaliges Waschen des Niederschlags mit absolutem Ethanol, wobei in diesem Schritt die folgende Reaktion abläuft:
2KAlO₂ + CO₂ + 3H₂O = K₂CO₃ + 2Al(OH)₃↓;
oder
2NaAlO₂ + CO₂ + 3 H₂O = Na₂CO₃ + 2Al(OH)₃↓;
und
12) Trocknen des Aluminiumhydroxids bei 80 bis 130 °C und anschließendes Calcinieren bei 500 bis 750 °C, um Aluminiumoxid zu erhalten, wobei in diesem Schritt die folgende Reaktion abläuft:
2Al(OH)₃ = Al₂O₃ + 3H₂O.

2. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1, wobei:
die alkalischen Fusionierungsmittel in Schritt 3) KOH und KNO₃ oder NaOH und NaNO₃ sind;
in Schritt 3) die folgenden Reaktionen ablaufen:
RuO₂ + 2KOH + KNO₃ = K₂RuO₄ + KNO₂ + H₂O;
Ru + 2KOH + 3KNO₃ = K₂RuO₄ + 3KNO₂ + H₂O;
Al₂O₃ + 2KOH = 2KAlO₂ + H₂O;
oder
RuO₂ + 2NaOH + NaNO₃ = Na₂RuO₄ + NaNO₂ + H₂O;
Ru + 2NaOH + 3NaNO₃ = Na₂RuO₄ + 3NaNO₂ + H₂O;
Al₂O₃ + 2NaOH = 2NaAlO₂ + H₂O;
und die Menge der verwendeten Alkalifusionierungsmittel das 2,5-fache ihrer theoretischen Menge beträgt.

3. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1 oder 2, wobei:
die Alkalifusion in Schritt 3) eine geschichtete Alkalifusion ist, die vier Schichten enthält;
vom Boden des Tiegels aufwärts sind 2/3 der Gesamtmenge an KOH, Abfallkatalysatoren, 1/3 der Gesamtmenge an KOH und KNO₃ Schicht für Schicht angeordnet; oder 2/3 der Gesamtmenge an NaOH, Abfallkatalysatoren, 1/3 der Gesamtmenge an NaOH und NaNO₃ sind Schicht für Schicht angeordnet; und
die geschichtete Alkalifusion das Sintern und Verdampfen von RuO₄ zur Verringerung des Rutheniumverlustes umgeht.

4. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1 oder 2, wobei die Temperatur der Alkalifusion in Schritt 3) 950 bis 1000 °C beträgt, um eine vollständige Umsetzung von Ruthenium und Aluminiumoxid mit den Alkalifusionierungsmitteln zu erzielen.

5. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1 oder 2, wobei eine Reaktionszeit der Alkalifusion in Schritt 3) 3 Stunden beträgt.

6. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1 oder 2, wobei in Schritt 4) das Alkalifusionierungsprodukt in entionisiertem Wasser mit einer Temperatur von 96 - 100 °C ausgelaugt wird, um sicherzustellen, dass das Ruthenat und vor allem das Aluminat vollständig ausgelaugt werden.

7. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1 oder 2, wobei in Schritt 4) das Verhältnis von Feststoff zu Flüssigkeit 3 beträgt.

8. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1 oder 2, wobei eine Konzentration der verdünnten Salpetersäure in den Schritten 5) und 8) 1 bis 3 mol/l beträgt.

9. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1 oder 2, wobei in Schritt 6) die Oxalsäurelösung oder Ammoniumoxalatlösung langsam in die Kobaltnitratlösung getropft wird, während 5 % Ammoniumwasser zugegeben wird, um den pH-Wert der Lösung bei 1,5 bis 1,7 zu halten, um Kobalt in der Lösung vollständig auszufällen, um eine hohe Rückgewinnungsrate von Kobalt zu erzielen.

10. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1 oder 2, wobei eine Temperatur zur Reduktion von Kobaltoxalat in Schritt 7) 400 bis 480 °C beträgt.

11. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1 oder 2, wobei in Schritt 9):
das Reduktionsmittel Ethanol im Überschuss vorhanden ist, um Ruthenat vollständig in einen Rutheniumhydroxid-Niederschlag zu überführen; und
ein Molverhältnis des Rutheniums in den Abfallkatalysatoren auf Rutheniumbasis zu dem absoluten Ethanol 1:3 bis 1:5 beträgt.

12. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1 oder 2, wobei eine konzentrierte Salzsäure in Schritt 10) einen Massenanteil von 36 bis 38 % aufweist.

13. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1 oder 2, wobei in Schritt 10) ein Molverhältnis von Hydroxylammoniumchlorid zu Rutheniumelement 1:1 beträgt, um β-RuCl₃·xH₂O mit einer hohen Reinheit zu erhalten.

14. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1 oder 2, wobei in Schritt 11) eine Reaktionstemperatur von 65 bis 85 °C bevorzugt ist, um Aluminiumhydroxid mit einer großen Teilchengröße herzustellen, das leicht gefiltert werden kann.

15. Verfahren zur Rückgewinnung von Metallkobalt, Ruthenium und Aluminium aus Co-Ru/Al₂O₃-Abfallkatalysatoren für die Fischer-Tropsch-Synthese nach Anspruch 1 oder 2, wobei in Schritt 11) eine Strömungsgeschwindigkeit des CO₂ 500 bis 1500 ml/min beträgt.

## Revendications

1. Procédé de récupération de cobalt, de ruthénium et d'aluminium métalliques de catalyseurs usagés de Co-Ru/Al₂O₃ pour une synthèse de Fischer-Tropsch, le procédé comprenant :
1) le placement de particules en vrac d'un catalyseur usagé de Co-Ru/Al₂O₃ dans un four à moufle, puis l'introduction d'air dans le four à moufle et la calcination des particules en vrac à 350 à 500 °C pendant 3 à 6 heures pour éliminer les hydrocarbures lourds sur la surface des particules en vrac, puis le refroidissement des particules en vrac à température ambiante ;
2) le broyage des particules en vrac obtenues à l'étape 1) en poudres uniformes, puis le placement des poudres broyées dans un réacteur à lit fluidisé, puis la purge du réacteur avec de l'azote pendant 0,5 heure, puis la réduction des poudres broyées dans une atmosphère mixte contenant du H₂ et du N₂ en un rapport en volume H₂ sur N₂ de 1/1 à 4/1 à une vitesse spatiale de 1 000 à 4 000 h⁻¹, une pression de 0,1 à 1 MPa, et une température de 350 à 800 °C pendant 8 à 12 heures ;
3) le placement des catalyseurs usagés réduits obtenus à l'étape 2) et des agents de fusion alcalins dans un creuset par couche, puis le placement du creuset dans un four à moufle, puis le chauffage du four à moufle et son maintien à 200 °C pendant 1 heure, puis l'augmentation de la température du four à moufle de 3 °C/minute à 900 à 1 000 °C en utilisant un programme de température pour réaliser une réaction de fusion alcaline pendant 2 à 4 heures ; puis le refroidissement du four à moufle à température ambiante pour obtenir un produit de fusion alcaline ;
4) la lixiviation du produit de fusion alcaline obtenu à l'étape 3) dans de l'eau désionisée ayant une température de 90 à 100 °C en un rapport solide/liquide de 1/2 à 1/4 pendant 0,5 à 1 heure pour dissoudre les K₂RuO₄ et KAlO₂ ou Na₂RuO₄ et NaAlO₂ hydrosolubles, puis la filtration pour obtenir un résidu ;
5) le lavage du résidu obtenu à l'étape 4) jusqu'à neutralité, puis l'ajout d'acide nitrique dilué en excès pour dissoudre le cobalt métallique et l'oxyde de cobalt dans le résidu pour obtenir une solution de nitrate de cobalt ;
6) l'ajustement de la solution de nitrate de cobalt obtenue à l'étape 5) à une concentration en Co²⁺ de 20 g/l, un pH de 1,5, et une température de 70 °C, puis l'ajout d'une solution d'acide oxalique ou d'une solution d'oxalate d'ammonium ayant un pH de 1,5 et une température de 70 °C à la solution de nitrate de cobalt pour faire précipiter l'ion cobalt sous la forme d'oxalate de cobalt, dans lequel la quantité molaire de l'acide oxalique dans la solution d'acide ou de l'oxalate d'ammonium dans la solution d'oxalate d'ammonium est 3 à 4 fois la quantité molaire de l'ion cobalt ; puis la filtration à chaud et le lavage du résidu avec de l'eau désionisée ayant une température de 65 à 80 °C ; puis la déshydratation du résidu avec de l'éthanol absolu pour obtenir un précipité d'oxalate de cobalt rose, dans lequel la réaction se produisant à cette étape est :
Co(NO₃)₂ + H₂C₂O₄ + 2H₂O = CoC₂O₄·2H₂O ↓+ 2HNO₃;
ou
Co(NO₃)₂+(NH₄)₂C₂O₄ + 2H₂O = CoC₂O₄·2H₂O ↓ +2NH₄NO₃;
7) le séchage de l'oxalate de cobalt obtenu à l'étape 6) dans un séchoir à 80 à 110 °C, puis le placement de l'oxalate de cobalt dans un réacteur à lit fluidisé, puis la purge du réacteur à lit fluidisé avec de l'azote pendant 0,5 heure, puis la réduction de l'oxalate de cobalt dans une atmosphère mixte contenant du H₂ et du N₂ en un rapport en volume du H₂ sur le N₂ de 1/1 à 4/1 à une température de 400 à 560 °C, une pression de 0,1 - 1 MPa, et une vitesse spatiale de 1 000 à 4 000 h⁻¹ pendant 2 à 4 heures pour obtenir du cobalt métallique, dans lequel la réaction se produisant à cette étape est :
CoC₂O₄·2H₂O = Co + 2CO₂ + 2H₂O;
8) l'ajout d'acide nitrique dilué au cobalt métallique obtenu à l'étape 7) jusqu'à ce que le cobalt métallique se dissolve juste totalement, puis l'évaporation pour obtenir du Co(NO₃)₂•6H₂O cristallisé ;
9) le mélange d'un filtrat de l'étape 4) et d'un effluent de l'étape 5), puis l'ajout goutte à goutte de l'agent de réduction d'éthanol absolu dans le mélange et l'agitation pour convertir le sel de ruthénium rose en un précipité d'hydroxyde de ruthénium noir, puis la filtration du précipité et le lavage du précipité avec de l'eau désionisée ayant une température de 65 à 80 °C jusqu'à ce que l'effluent devienne neutre ou ne contienne plus d'ions potassium ou sodium, et le lavage du précipité trois fois avec de l'éthanol absolu, dans lequel la réaction se produisant à cette étape est : 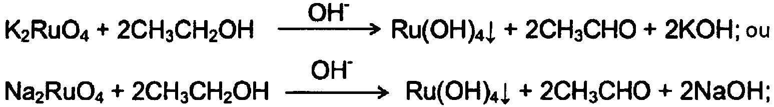
10) le placement de l'hydroxyde de ruthénium noir obtenu à l'étape 9) dans un flacon à trois cols ayant des dispositifs d'agitation et de reflux ; puis l'ajout d'acide chlorhydrique concentré au ballon à trois cols et l'agitation à 91 à 95 °C pendant 1 à 2 heures ; puis l'ajout de chlorure d'hydroxyl ammonium pour complètement dissoudre l'hydroxyde de ruthénium noir ; puis le fait de laisser la solution obtenue reposer ; puis le fait de mettre la solution dans un flacon de distillation et de distiller sous vide à un degré de vide de 40 ± 1 KPa jusqu'à la conversion de la solution en une pâte ; puis l'arrêt du chauffage pour laisser le liquide s'évaporer spontanément pour obtenir un cristal de β-RuCl3•xH₂O, dans lequel les réactions se produisant à cette étape sont :
Ru(OH)₄ + 4HCl = RuCl₄ + 4H₂O;
2RuCl₄ + 2NH₂OH·HCl = 2RuCl₃ + N₂ ↑+ 4HCl + 2H₂O;
11) le mélange du filtrat obtenu lors de la filtration du précipité d'hydroxyde de ruthénium et de l'effluent obtenu du lavage du précipité à l'étape 9), puis l'introduction de CO₂ ayant une pureté supérieure à 99,0 % dans le liquide mixte et l'agitation à 25 à 95 °C pour produire un précipité d'hydroxyde d'aluminium blanc, dans lequel la réaction est terminée lorsque le pH de la solution atteint 10,0 ; puis la filtration et le lavage du précipité avec de l'eau désionisée ayant une température de 65 à 80 °C jusqu'à ce que l'effluent soit neutre ou ne contienne plus d'ions potassium ou sodium ; puis le lavage du précipité trois fois avec de l'éthanol absolu, dans lequel la réaction se produisant à cette étape est :
2KAlO₂ + CO₂ + 3H₂O = K₂CO₃ + 2Al(OH)₃↓;
ou
2NaAlO₂ + CO₂ + 3 H₂O = Na₂CO₃ + 2Al(OH)₃↓;
et
12) le séchage de l'hydroxyde d'aluminium à 80 à 130 °C, puis la calcination à 500 à 750 °C pour obtenir de l'oxyde d'aluminium, dans lequel la réaction se produisant à cette étape est :
2Al(OH)₃ = Al₂O₃ + 3H₂O.

2. Procédé de récupération de cobalt, de ruthénium et d'aluminium métalliques de catalyseurs usagés de Co-Ru/Al₂O₃ pour une synthèse de Fischer-Tropsch selon la revendication 1, dans lequel :
les agents de fusion alcalins à l'étape 3) sont le KOH et le KNO₃, ou le NaOH et le NaNO₃ ;
les réactions se produisant à l'étape 3) sont
RuO₂ + 2KOH + KNO₃ = K₂RuO₄ + KNO₂ + H₂O;
Ru + 2KOH + 3KNO₃ = K₂RuO₄ + 3KNO₂ + H₂O;
Al₂O₃ + 2KOH = 2KAlO₂ + H₂O;
ou
RuO₂ + 2NaOH + NaNO₃ = Na₂RuO₄ + NaNO₂ + H₂O;
Ru + 2NaOH + 3NaNO₃ = Na₂RuO₄ + 3NaNO₂ + H₂O;
Al₂O₃ + 2NaOH = 2NaAlO₂ + H₂O; et
la quantité des agents de fusion alcalins utilisée est 2,5 fois une quantité théorique de ceux-ci.

3. Procédé de récupération de cobalt, de ruthénium et d'aluminium métalliques de catalyseurs usagés de Co-Ru/Al₂O₃ pour une synthèse de Fischer-Tropsch selon la revendication 1 ou 2, dans lequel :
la fusion alcaline à l'étape 3) est une fusion alcaline stratifiée contenant quatre couches ;
du fond du creuset vers le haut, 2/3 de la quantité totale de KOH, catalyseurs usagés, 1/3 de la quantité totale de KOH, et KNO₃ sont disposés couche par couche ;
ou 2/3 de la quantité totale de NaOH, catalyseurs usagés, 1/3 de la quantité totale de NaOH, et NaNO₃ sont disposés couche par couche ; et
la fusion alcaline stratifiée évite le frittage et l'évaporation du RuO₄ pour réduire la perte de ruthénium.

4. Procédé de récupération de cobalt, de ruthénium et d'aluminium métalliques de catalyseurs usagés de Co-Ru/Al₂O₃ pour une synthèse de Fischer-Tropsch selon la revendication 1 ou 2, dans lequel une température de la fusion alcaline à l'étape 3) est de 950 à 1 000 °C pour atteindre une réaction complète du ruthénium et de l'oxyde d'aluminium avec les agents de fusion alcalins.

5. Procédé de récupération de cobalt, de ruthénium et d'aluminium métalliques de catalyseurs usagés de Co-Ru/Al₂O₃ pour une synthèse de Fischer-Tropsch selon la revendication 1 ou 2, dans lequel une durée de réaction de la fusion alcaline à l'étape 3) est de 3 heures.

6. Procédé de récupération de cobalt, de ruthénium et d'aluminium métalliques de catalyseurs usagés de Co-Ru/Al₂O₃ pour une synthèse de Fischer-Tropsch selon la revendication 1 ou 2, dans lequel à l'étape 4), le produit de fusion alcaline est lixivié dans de l'eau désionisée ayant une température de 96 à 100 °C pour garantir la lixiviation complète du ruthénate et, de manière plus importante, de l'aluminate.

7. Procédé de récupération de cobalt, de ruthénium et d'aluminium métalliques de catalyseurs usagés de Co-Ru/Al₂O₃ pour une synthèse de Fischer-Tropsch selon la revendication 1 ou 2, dans lequel à l'étape 4), le rapport solide/liquide est de 3.

8. Procédé de récupération de cobalt, de ruthénium et d'aluminium métalliques de catalyseurs usagés de Co-Ru/Al₂O₃ pour une synthèse de Fischer-Tropsch selon la revendication 1 ou 2, dans lequel une concentration de l'acide nitrique dilué aux étapes 5) et 8) est de 1 à 3 mol/1.

9. Procédé de récupération de cobalt, de ruthénium et d'aluminium métalliques de catalyseurs usagés de Co-Ru/Al₂O₃ pour une synthèse de Fischer-Tropsch selon la revendication 1 ou 2, dans lequel à l'étape 6), la solution d'acide oxalique ou la solution d'oxalate d'ammonium est lentement ajoutée goutte à goutte à la solution de nitrate de cobalt alors que de l'eau ammoniacale à 5 % est ajoutée pour maintenir le pH de la solution à 1,5 à 1,7 pour complètement précipiter le cobalt dans la solution pour atteindre un taux de récupération du cobalt élevé.

10. Procédé de récupération de cobalt, de ruthénium et d'aluminium métalliques de catalyseurs usagés de Co-Ru/Al₂O₃ pour une synthèse de Fischer-Tropsch selon la revendication 1 ou 2, dans lequel une température de réduction de l'oxalate de cobalt à l'étape 7) est de 400 à 480 °C.

11. Procédé de récupération de cobalt, de ruthénium et d'aluminium métalliques de catalyseurs usagés de Co-Ru/Al₂O₃ pour une synthèse de Fischer-Tropsch selon la revendication 1 ou 2, dans lequel à l'étape 9) :
l'agent de réduction d'éthanol est en excès pour convertir complètement le ruthénate en précipité d'hydroxyde de ruthénium ; et
un rapport molaire du ruthénium dans les catalyseurs usagés à base de ruthénium sur l'éthanol absolu est de 1/3 à 1/5.

12. Procédé de récupération de cobalt, de ruthénium et d'aluminium métalliques de catalyseurs usagés de Co-Ru/Al₂O₃ pour une synthèse de Fischer-Tropsch selon la revendication 1 ou 2, dans lequel un acide chlorhydrique concentré à l'étape 10) a une fraction massique de 36 à 38 %.

13. Procédé de récupération de cobalt, de ruthénium et d'aluminium métalliques de catalyseurs usagés de Co-Ru/Al₂O₃ pour une synthèse de Fischer-Tropsch selon la revendication 1 ou 2, dans lequel à l'étape 10), un rapport molaire du chlorure d'hydroxyle ammonium sur le ruthénium élémentaire est de 1/1 pour obtenir du β-RuCl₃•xH₂O ayant une grande pureté.

14. Procédé de récupération de cobalt, de ruthénium et d'aluminium métalliques de catalyseurs usagés de Co-Ru/Al₂O₃ pour une synthèse de Fischer-Tropsch selon la revendication 1 ou 2, dans lequel à l'étape 11), une température de réaction est de préférence de 65 à 85 °C pour produire de l'hydroxyde d'aluminium ayant une grande taille de particules qui peut être facilement filtré.

15. Procédé de récupération de cobalt, de ruthénium et d'aluminium métalliques de catalyseurs usagés de Co-Ru/Al₂O₃ pour une synthèse de Fischer-Tropsch selon la revendication 1 ou 2, dans lequel à l'étape 11), un débit du CO₂ est de 500 à 1 500 ml/min.
